# EUROPEAN PATENT SPECIFICATION

(11) **EP 0 383 392 B1**
(45) Date of publication and mention of the grant of the patent: **21.09.1994**
(21) Application number: 90200311.0
(22) Date of filing: 12.02.1990
(51) Int. Cl.: A01D 34/66

(54) **A mowing machine**
Mähvorrichtung
Faucheuse

(30) Priority: 13.02.1989 NL 8900338
(43) Date of publication of application: 22.08.1990
(73) Proprietor: C. van der Lely N.V., NL-3155 PD Maasland (NL)
(72) Inventor: Van der Lely, Cornelis, ZUG (CH)
(74) Representative: Mulder, Herman

(56) References cited:
- EP-A- 0 070 585
- EP-A- 0 126 518
- EP-A- 0 223 302
- GB-A- 2 166 032
- NL-A- 7 510 686
- NL-A- 7 605 371
- NL-A- 7 806 363
- NL-A- 8 201 507
- NL-A- 8 700 863
- US-A- 2 625 784
- US-A- 3 507 102

## Description

The present invention relates to a mowing machine comprising a cutter unit with a plurality of mowing members connected to a tubular structure, which at the leading side is provided with an oblique extending face to which the housing of the mowing members are connected.

A mowing machine of the above-defined type is disclosed in DE-A-27 22 554. The invention has for its object to simplify the manner in which in this Offenlegungsschrift the mowing members are connected to the tubular structure, i.e. in such a manner that an easy demounting of a mowing member without demounting other constituant parts of the cutter unit will be possible.

According to the invention, the mowing machine of the above-defined type is characterized in that the side flange of a housing of a mowing member bears against the side flange of an adjacent part of the cutter unit according to a single plane perpendicular to the tubular structure and in such a way that the mowing member can be removed from the tubular structure without demounting other constituent parts of the cutter unit. The tubular structure may be made as an integral whole but, alternatively, it may consist of several, e.g. two, sections.

In a special embodiment according to the invention, the tubular structure has a double wall. This double wall may be obtained by folding it together, i.e. by doubling two adjacent wall portions so as to form an integral tubular structure enclosing a hollow space. The mowing members may be connected to this double wall.

According to the invention, the tubular structure may alternatively consist of two detachable walls, which, in particular, may be bolted together. In particular, a number of the bolts used for this purpose may also be used for the connection of the mowing members, i.e. in such a manner that the torsional stiffness of the tubular structure together with the mowing members connected thereto is increased as well.

In addition to the fact that the mowing members are bolted to the tubular structure, in accordance with the invention, there may also be bolted intermediate members to the tubular structure between the mowing members, one intermediate member preferably being arranged between every two mowing members. Thus, according to the invention, there is obtained a construction wherein a mowing member is detachable, without it being necessary for an intermediate member to be removed. Therefore, the invention also relates to a mowing machine comprising a plurality of mowing members connected to a tubular structure, characterized in that intermediate members are arranged between the mowing members, and that a mowing member can be removed without the removal of an intermediate member.

In addition to the mowing members and the intermediate members, in accordance with the invention, there may also be bolted to the tubular structure slide shoes provided at the bottom side of the mowing machine. In an advantageous embodiment according to the invention, the mowing members, the intermediate members arranged therebetween and/or the slide members provided at the bottom side of the mowing machine can be bolted to the tubular structure by means of the same bolts as those by means of which the detachable walls of the tubular structure can be bolted together.

Each mowing member includes a mowing disc, while, in accordance with the invention, the mowing elements are drivable via a through-shaft which is arranged outside the tubular structure and, preferably, is of a square cross-section. This provides a construction in which, after removal of the through-drive shaft and, if necessary, the separate removal of a slide shoe, a relevant mowing member can be removed in a simple manner.

For a better understanding of the invention and to show how the same may be carried into effect, reference will now be made, by way of example, to some embodiments shown in the accompanying drawings. Therein:
Figure 1 is a plan view of a mowing machine of the invention attached to a tractor;
Figure 2 shows a portion of the plan view of Figure 1 to an enlarged scale;
Figure 3 is a side elevational view of the mowing machine shown in Figure 1;
Figure 4 is a cross-sectional view of the crusher rotor of the crop processing implement in accordance with the invention;
Figure 5 shows a portion of a rear view of the crusher rotor shown in a cross-sectional view in Figure 4;
Figure 6 is a plan view of a portion of the mowing unit of the mowing machine according to the invention;
Figure 7 is a cross-sectional view of the mowing unit;
Figure 8 shows a portion of a longitudinal cross-sectional view of the mowing unit;
Figure 9 is a cross-sectional view of a different embodiment of the mowing unit.

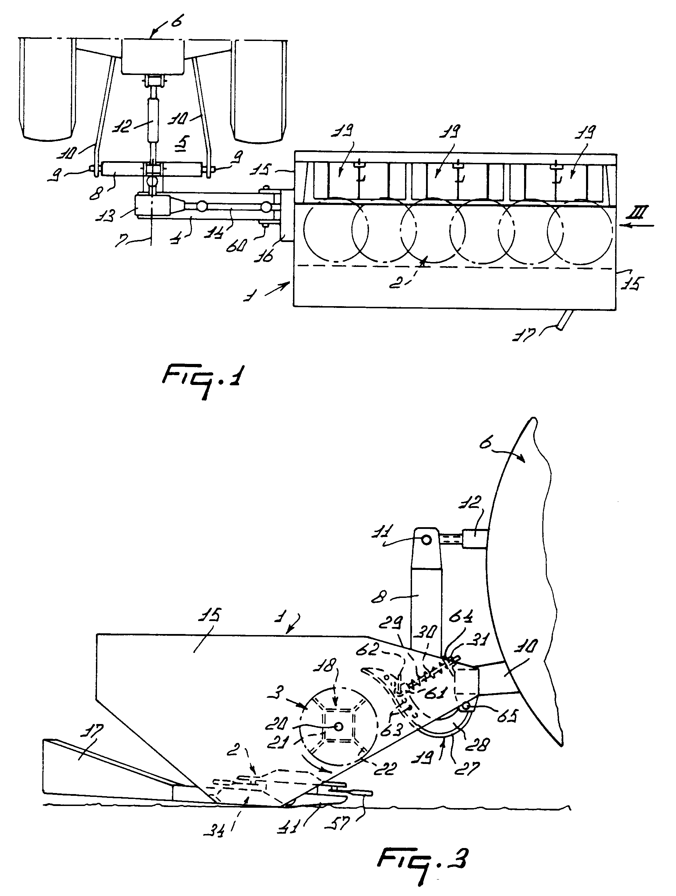

The mowing machine 1 shown in the drawings includes a cutter unit 2 and a crop processing implement 3. The assembly of the cutter unit 2 and the crop processing unit 3 is connected capably of pivoting about an approximately horizontal pivot shaft 60 extending in the direction of operative travel to a carrier arm 4, by means of which the mowing machine 1 can be coupled to the three-point lifting hitch 5 of a tractor or a similar vehicle 6, as is shown in Figure 1. In addition, the carrier arm 4 is connected to a lower carrier beam of a trestle 8 in such a manner that it is capable of pivoting about an approximately horizontal pivot shaft which extends in the direction of operative travel and whose centre line in Figure 1 is denoted by reference numeral 7. At its lower side, the trestle 8 is connected by means of coupling elements 9 to the lifting arms 10 and at its upper side by means of a coupling element 11 to the top rod 12 of the three-point lifting hitch 5. The drive of the cutter unit 2 and of the crop processing implement 3 is effected from the power take-off shaft of the tractor 6 via various transmission members accommodated in the box 13 connected to the carrier arm 4, the intermediate shaft 14 provided with universal joints and various transmission members accommodated in the box 16 connected to the frame 15 of the mowing machine 1.

The one side of the cutter unit 2 is connected rigidly to the frame 15 and the other is provided with a crop guiding element 17. The frame 15 furthermore includes the crop processing implement 3. This crop processing implement comprises a crusher member 18 and a plurality of individually adjusting co-operating members 19 co-operating therewith.

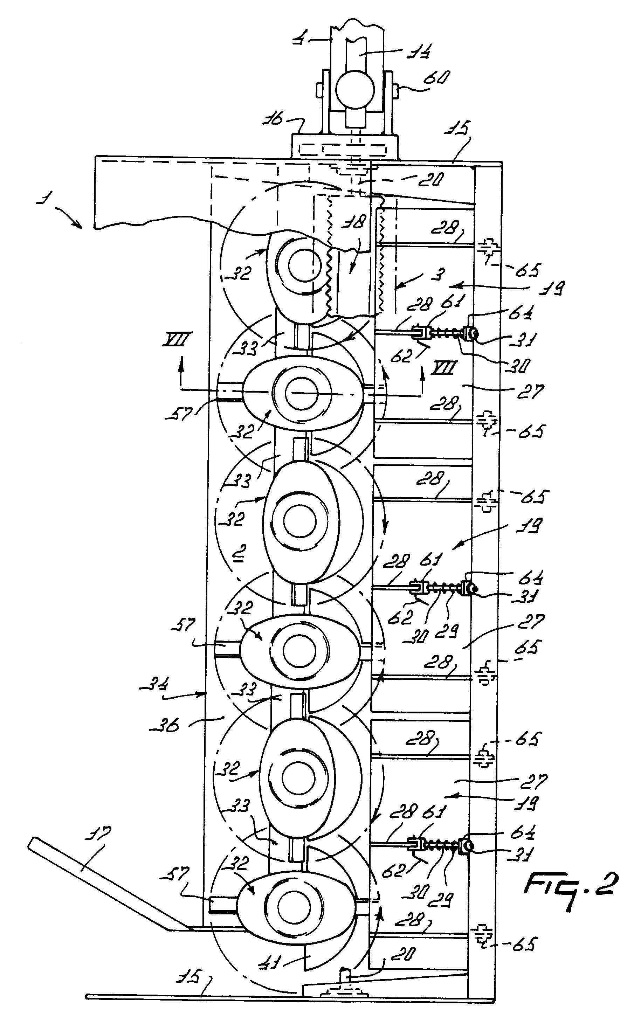

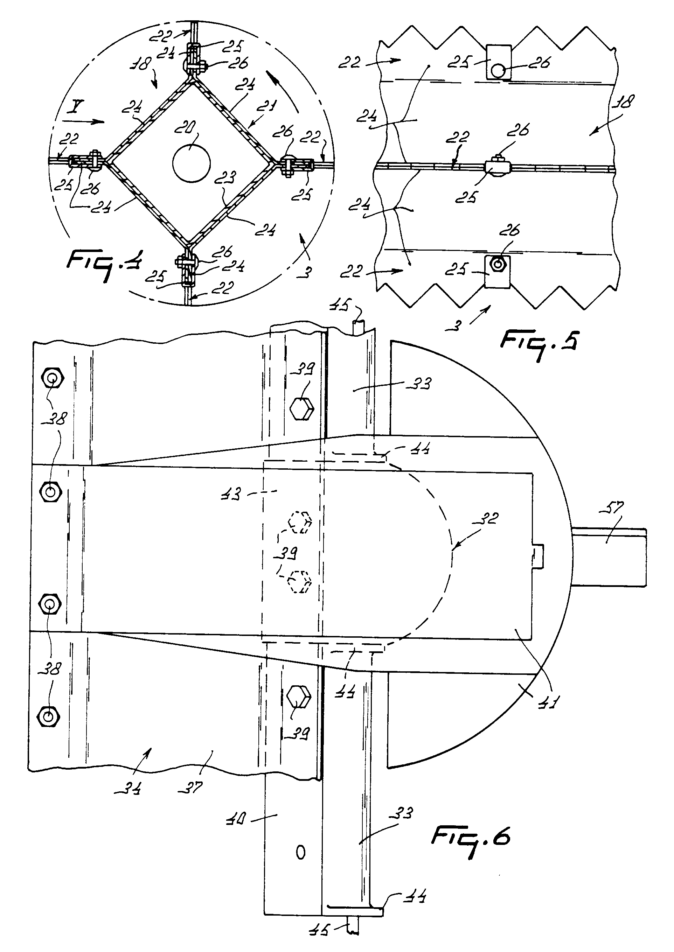

The crusher member 18 (see Figures 3 to 5) is connected to the frame 15 capably of rotation about a rotor shaft 20 and includes a tubular construction 21 which, at least approximately parallel to the rotary shaft of the crusher member 18, is fitted with plate-shaped blades 22. The tubular structure 21 may be formed from a square tube 23 having as plate-shaped blades extending therealong and at the corners thereof radially outwardly directed profiled plates 24. When a quadrangular tube is employed, four of such plates are provided. It will be obvious that, in addition to the preferred embodiment as described, other polygonal tube structures provided at their corners with radially outwardly extending plates may be employed alternatively. In the construction shown, each time two plates 24 are clamped together by means of U-shaped strips 25 and bolts 26 (Figure 5). Consequently, the plate-shaped blades 22 and, in particular, the plates 24 can easily be detached and replaced, if necessary. The plates 24 are provided with plate-shaped tines which e.g. are triangular in shape. When the mowing machine is operative, the crusher member 18 and in particular the plates 24 produce an upward air flow in the direction of rotation. When the mowing machine is in operation, it is in a position transversely to the direction of operative travel, while the crop processing implement 3 is disposed in front of the cutter unit 2. The mown crop is deflected forwardly by the crusher member 18, whereafter the stalks, their feet extending upwardly, are forced upwardly by the air flow through the space between the crusher member 18 and the co-operating members 19 arranged in front of and above them, which crusher member 18 and co-operating members 19 together realize the desired extent of crop crushing. In the embodiment shown (Figures 2 and 3) there are indicated three co-operating members 19. Each co-operating member 19 includes a curved plate 27 which by means of pivot pins 65 is suspended pivotably from the frame 15 and is provided with ribs 28, as well as an adjustable spring 29 arranged about a shaft 30. At its one end, the shaft 30 is provided with a forked section 21, with the aid of which this end of the shaft can be secured in one of the apertures 63 in the centremost rib of the co-operating member 19 by means of a pin 62. At its other end, the shaft 30 is passed through an aperture in a support 64 connected to the frame 15 and at one side thereof is locked by means of a nut 31, while the spring 29 arranged about the shaft 30 urges against the other side of the support 64. Thus, the curved plates 27 are disposed such in the frame 15 that they are under spring action and adjustably so by means of the apertures 63. Consequently, along the width of the crop processing implement 3 the space between the crusher member 18 and the individual co-operating members 19 can be adjusted to the thickness of the crop flow to be crushed, which thickness may vary across the width of the machine. In the embodiment shown, the cutter unit has six mowing discs, so that for every two mowing discs there is present one co-operating member. In this embodiment, the working width of the cutter unit 2 is at least substantially equal to that of the crop processing implement 3, i.e. approximately two metres. The diameter of the crusher member is approximately 25 cms.

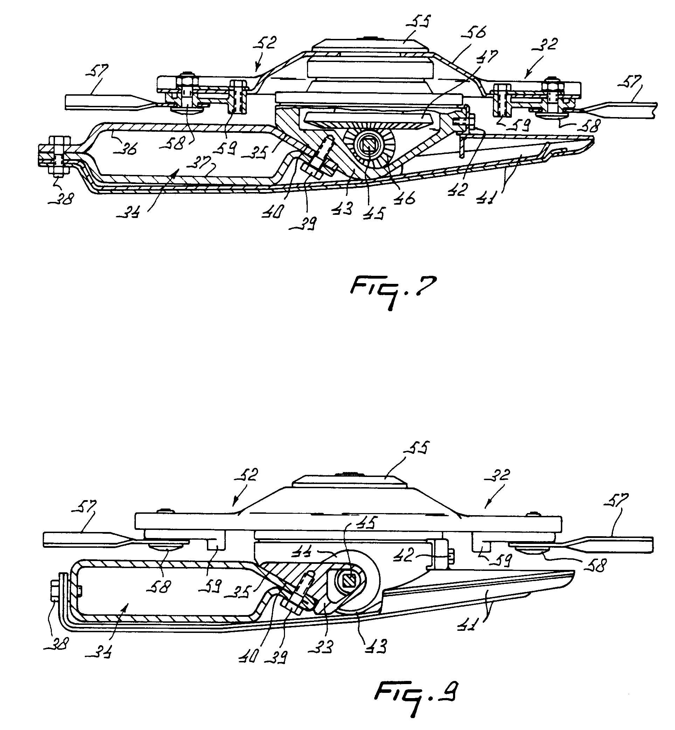

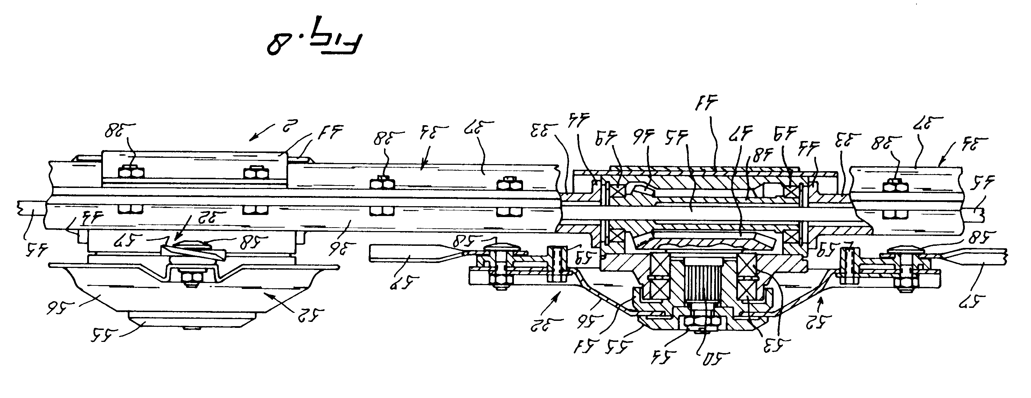

The cutter unit 2, a first embodiment of which is illustrated in Figures 6 to 8 and a second embodiment is shown only as a cross-sectional view in Figure 9, comprises mowing members 32 and intermediate members 33 which are connected to a tubular structure 34. The tubular structure 34 is formed such that at its leading side it has a wall 35 which deviates from the vertical, in particular an oblique one. The tubular structure may be assembled from two detachable sections 36 and 37 (see Figure 7), which sections are shaped such that together they enclose a hollow space. At the rear side, the two sections are folded together to form a double wall and are interconnected by means of bolts 38. The leading sides of the two sections are shaped such that they are contiguous to each other, as a result of which the leading side of the tubular structure 34 has a double wall, which two sections may be interconnected by bolts 39. With the aid of these bolts 39 also the mowing members 32 and the intermediate members 33 may be secured to the tubular structure, whereby, as these members, too, have a certain torsional stiffness, the torsional stiffness of the tubular structure together with the mowing members connected thereto is increased as well. To that end the mowing members 32 and the intermediate members 33 also have an oblique wall 40 which bears against the wall 35 of the tubular structure 34. The tubular structure is furthermore of such a type that the bolts 38 and 39 are easily accessible, i.e. the bolts 38 from the rear side and the bolts 39 from the bottom side. In the embodiments shown, the bolts 38 at the rear side are also used to secure mowing or slide shows 41 onto the bottom of the mowing members 32. At their leading sides, these mowing shoes are secured to the mowing members 32 by means of bolts 42.

A mowing member 32 consists of a housing 43 which is detachable relative to the contiguous intermediate members 33; the intermediate members 33 bear against the housing 43 with their side flanges 44 only. Through the housing 43 passes the drive shaft 45, which shaft has a square cross-section, although it may alternatively be of a hexagonal structure. This drive shaft constitutes a through-shaft which entirely by-passes the tubular structure. Inside the housing 43 there are accommodated two conical gearwheels 46 and 47. The conical gearwheel 46 forms an integral whole with a sleeve 48, which sleeve extends through substantially the entire length of the housing around the shaft 45 present therein. The sleeve 48 cum gearwheel 46 is supported in bearings 49 arranged on both sides in the housing 43. The conical gearwheel 47 is connected rigidly to an upwardly extending shaft 50, to which the inner bushing 51 of the mowing disc 52 is connected via splines. The inner bushing 51 is accommodated in the housing 43 capably of rotation by means of bearings 53. Between the inner bushing 51 and a cover plate 55 there is secured the disc-shaped plate 56 of the mowing disc 52, the said cover plate 55 being connected to the shaft 50 via a bolt 54. On the disc-shaped plate 56 there are arranged diametrically opposite each other two mowing knives 57. The mowing knives 57 are freely rotatable about pins 58 and their movement is limited by a stop 59.

The drive shaft 45 is driven at a high number of revolutions, whereafter the conical gearwheels introduce a speed reduction by a factor of approximately two to three. Consequently, a relatively low torsion moment in the drive shaft 45 is sufficient and it may have a small cross-section. The number of revolutions of the drive shaft 45 must, of course, be increased considerably compared with the number of revolutions of the power take-off shaft in the box 16, while in the mowing members the number of revolutions of the mowing discs is reduced again relative to that of the drive shaft.

In the embodiment shown in Figure 9, the tubular construction 34 is made as an integral whole by folding it in such a manner that a hollow space is enclosed, while the two walls again constitute a double wall having an obliquely downwardly and forwardly extending face. In this design, the mowing shoes 41 are fitted against the upwardly extending rear wall of the tubular structure. In all further respects the housing 43 of the mowing members is identical to that shown in Figure 7; the cross-sectional view has only been taken in a different position in the cutter unit.

It should furthermore be noted that the tubular structure may also be formed by a beam having an oblique wall at its leading side. This beam will then again have a width which is approximately the same as that of the mowing machine. The mowing members and the intermediate members may then be fitted to this beam.

Demounting of the mowing unit is simplified significantly by this structure; to that end the drive shaft 45 is first drawn from the mowing unit, whereafter the bolts 38 and 42 of the mowing shoes can be detached. After removal of the mowing shoes, the bolts 39 are accessible. By loosening only two bolts, the relevant mowing member 32 can be removed from the tubular structure 34, the assembly of the further component parts of the mowing unit remaining unaltered completely.

## Claims

1. A mowing machine comprising a cutter unit (2) with a plurality of mowing members (32) connected to a tubular structure (34), which at the leading side is provided with an oblique extending face to which the housing (43) of the mowing members (32) are connected, characterized in that the side flange (44) of a housing (43) of a mowing member (32) bears against the side flange of an adjacent part of the cutter unit (2) according to a single plane perpendicular to the tubular structure (34) and in such a way that the mowing member (32) can be removed from the tubular structure without demounting other constituent parts of the cutter unit (2).

2. A mowing machine as claimed in claim 1, characterized in that the tubular structure (34) has a double wall, to which the mowing members (32) are connected.

3. A mowing machine as claimed in claim 1 or 2, characterized in that the tubular structure (34) consists of several sections (36, 37), which are bolted together.

4. A mowing machine as claimed in claim 3, characterized in that a number of bolts (39) is used for the connection of the mowing members (32) to the tubular structure (34), i.e. in such a manner that the torsional stiffness of the tubular structure (34) together with the mowing members (32) connected thereto is increased as well.

5. A mowing machine as claimed in any one of the preceding claims, characterized in that there are bolted intermediate members (33) to the tubular structure (34) between the mowing members (32).

6. A mowing machine as claimed in claim 5, characterized in that one intermediate member (33) is arranged between every two mowing members (32).

7. A mowing machine as claimed in any one of the preceding claims, characterized in that there are bolted to the tubular structure (34) slide shoes (41) provided at the bottom side of the mowing machine.

8. A mowing machine as claimed in claim 7 and any one of the preceding claims so far as dependent from claim 3, characterized in that the mowing members (32), the intermediate members (33) arranged therebetween and/or the slide shoes (41) provided at the bottom side of the mowing machine are connected to the tubular structure (34) by means of the same bolts (38) as those by means of which the sections (36, 37) of the tubular structure (34) are bolted together.

9. A mowing machine as claimed in any one of the preceding claims, characterized in that the mowing members (32) are drivable via a drive shaft (45) arranged outside the tubular structure (34).

## Patentansprüche

1. Mähmaschine, die ein Mähwerk (2) mit mehreren Mähgliedern (32) aufweist, die an einem langgestreckten Hohlkörper (34) angeordnet sind, an dessen Vorderseite eine schräg gerichtete Fläche vorgesehen ist, an welcher die Gehäuse (43) der Mähglieder (32) angebracht sind,
dadurch gekennzeichnet, daß der Seitenflansch (44) eines Gehäuses (43) eines Mähgliedes (32) an dem Seitenflansch eines danebenliegenden Teiles des Mähwerkes (2) in einer sich senkrecht zu dem Hohlkörper (34) erstreckenden Ebene derart anliegt, daß das Mähglied (32) von der Hohlkörper ohne Ausbau anderer Bauteile des Mähwerkes (2) demontiert werden kann.

2. Mähmaschine nach Anspruch 1,
dadurch gekennzeichnet, daß der Hohlkörper (34) eine doppelte Wandung aufweist, mit der die Mähglieder (32) verbunden sind.

3. Mähmaschine nach Anspruch 1 oder 2,
dadurch gekennzeichnet, daß der Hohlkörper (34) aus mehreren Teilen (36, 37) besteht, die zusammengeschraubt sind.

4. Mähmaschine nach Anspruch 3,
dadurch gekennzeichnet, daß die Mähglieder (32) mit dem Hohlkörper (34) durch eine Anzahl Bolzen (39) derart verbunden sind, daß die Torsionssteifigkeit des Hohlkörpers (34) zusammen mit den mit ihm verbundenen Mähgliedern (32) ebenfalls erhöht wird.

5. Mähmaschine nach einem der vorhergehenden Ansprüche, dadurch gekennzeichnet, daß zwischen den Mähgliedern (32) Zwischenglieder (33) angeordnet sind, die mit dem Hohlkörper (34) verschraubt sind.

6. Mähmaschine nach Anspruch 5,
dadurch gekennzeichnet, daß zwischen je zwei Mähgliedern (32) ein Zwischenglied (33) angeordnet ist.

7. Mähmaschine nach einem der vorhergehenden Ansprüche, dadurch gekennzeichnet, daß an der Unterseite der Mähmaschine angeordnete Gleitschuhe (41) an den Hohlkörper (34) angeschraubt sind.

8. Mähmaschine nach Anspruch 7 sowie einem der vorhergehenden Ansprüche, soweit sie von Anspruch 3 abhängen, dadurch gekennzeichnet, daß die Mähglieder (32), die zwischen ihnen angeordneten Zwischenglieder (33) und/oder die an der Unterseite der Mähmaschine angeordneten Gleitschuhe (41) mit dem Hohlkörper (34) mittels derselben Bolzen (38) verbunden sind, mit denen die Teile (36, 37) des Hohlkörpers (34) zusammengeschraubt sind.

9. Mähmaschine nach einem der vorhergehenden Ansprüche, dadurch gekennzeichnet, daß die Mähglieder (32) über eine außerhalb des Hohlkörpers (34) angeordnete Antriebswelle (45) anzutreiben sind.

## Revendications

1. Machine faucheuse comprenant une unité de coupe (2) avec une pluralité d'organes faucheurs (32) reliés à une structure tubulaire (34) munie sur son côté antérieur d'une face s'étendant en oblique, à laquelle sont reliés les boîtiers (43) des organes faucheurs (35),
**caractérisée** en ce que la bride latérale (44) d'un boîtier (43) d'un organe faucheur (32) porte contre la bride latérale d'une partie adjacente de l'unité de coupe (2) selon un seul plan perpendiculaire à la structure tubulaire (34), et de telle manière que l'organe faucheur (32) puisse être retiré de la structure tubulaire sans démonter d'autres parties constitutives de l'unité de coupe (2).

2. Machine faucheuse selon la revendication 1, caractérisée en ce que la structure tubulaire (34) a une double paroi à laquelle sont reliés les organes faucheurs (32).

3. Machine faucheuse selon la revendication 1 ou 2, caractérisée en ce que la structure tubulaire (34) se compose de plusieurs sections (36, 37) qui sont boulonnées ensemble.

4. Machine faucheuse selon la revendication 3, caractérisée en ce qu'un certain nombre de boulons (39) sont utilisés pour relier les organes faucheurs (32) à la structure tubulaire (34), c'est à dire de telle manière que la rigidité à la torsion de la structure tubulaire (34), ensemble avec les organes faucheurs (32) reliés à cette structure, soit également augmentée.

5. Machine faucheuse selon l'une quelconque des revendications précédentes, caractérisée en ce que des organes intermédiaires (33) sont boulonnés à la structure tubulaire (34) entre les organes faucheurs (32).

6. Machine faucheuse selon la revendication 5, caractérisée en ce qu'un organe intermédiaire (33) est disposé chaque fois entre deux organes faucheurs (32).

7. Machine faucheuse selon l'une quelconque des revendications précédentes, caractérisée en ce que des sabots glissants (41) prévus sous le côté inférieur de la machine faucheuse sont boulonnés à la structure tubulaire (34).

8. Machine faucheuse selon la revendication 7 et selon l'une quelconque des revendications précédentes, pour autant qu'elle dépende de la revendication 3, caractérisée en ce que les organes faucheurs (32), les organes intermédiaires (33) disposés entre ceux-ci, et/ou les sabots glissants (41) prévus sous le côté inférieur de la machine faucheuse, sont reliés à la structure tubulaire (34) au moyen des mêmes boulons (38) que ceux au moyen desquels les sections (36, 37) de la structure tubulaire (34) sont boulonnées ensemble.

9. Machine faucheuse selon l'une quelconque des revendications précédentes, caractérisée en ce que les organes faucheurs (32) peuvent être entraînés au moyen d'un arbre d'entraînement (45) disposé à l'extérieur de la structure tubulaire (34).
